# EUROPEAN PATENT SPECIFICATION

(11) **EP 3 896 917 B1**
(45) Date of publication and mention of the grant of the patent: **13.03.2024**
(21) Application number: 20169904.8
(22) Date of filing: 16.04.2020
(51) Int. Cl.: H04L 12/46

(54) **SYSTEM AND METHOD FOR TRANSMITTING TIME-CRITICAL ANALOG SIGNALS AND/OR DIGITAL SIGNAL**
SYSTEM UND VERFAHREN ZUR ÜBERTRAGUNG ZEITKRITISCHER ANALOGER SIGNALE UND/ODER DIGITALER SIGNALE
SYSTÈME ET PROCÉDÉ POUR TRANSMETTRE DES SIGNAUX ANALOGIQUES ET/OU DES SIGNAUX NUMÉRIQUES À TEMPS CRITIQUE

(43) Date of publication of application: 20.10.2021
(73) Proprietor: Rohde & Schwarz GmbH & Co. KG, 81671 München (DE)
(72) Inventor: Langguth, Torsten, 81671 München (DE); Schwarz, Andreas, 81671 München (DE)
(74) Representative: Novagraaf Group

(56) References cited:
- EP-A1- 3 531 651
- US-A1- 2012 300 788
- US-A1- 2020 052 927

## Description

The invention relates to a system for transmitting time-critical analog signals and/or digital signals between a first device and a second device, wherein the system comprises a first protocol converter connected to the first device and at least a second protocol converter connected to the second device. Furthermore, the invention also relates to a method of transmitting time-critical analog signals and/or digital signals between a first device and a second device.

To support emergency services, e.g. in rescue operations on water, on land and in the air, interoperability contributes decisively to the detection of the present situation and thus enables a quick and coordinated action of all involved participants.

Different devices are typically linked to respective communication lines in order ensure encrypted or unencrypted transmission of information between individual participants, particularly transmission of voice and data communication between mobile participants (e.g. planes, ships, drones), but also between at least one mobile participant and at least one stationary participant (e.g. a base station) or between two or more stationary participants.

The respective devices for voice and data communication typically use interfaces for narrowband audio, broadband audio and/or serial data in different modes: Currently existing devices for data link communication, for example in ship communication systems, are characterized by the use of special interfaces for the serial data transmission or voice transmission such as RS-232, narrowband audio and broadband audio. This also applies to terminals for voice and data communication in general and not only for data link terminals.

Accordingly, device-specific cabling is required for these interfaces, since data link communication lines require extremely short delay times in the communication.

However, the direct cabling has several disadvantages such as restrictions with regard to range, less flexible connectivity of individual devices as well as a required rewiring in case of using different devices for transmission and/or reception.

In EP 3 531 651 A1, a system and method for transmitting time-critical analog signals and digital data are shown, wherein data packets are exchanged between protocol converts associated with a transmission side and a reception side, respectively.

US 2012/300788 A1 describes systems and methods for a serial redirector device, which use serial communication redirection through a packed-based interface.

In US 2020/052927 A1, a method and a system for application transmission control protocol tunneling over the public internet are described.

Accordingly, there is a need for a more flexible and easy way to transmit time-critical analog signals and/or digital signals.

The invention provides a system for transmitting time-critical analog signals and/or digital signals between a first device and a second device, wherein the system comprises at least a first protocol converter connected to the first device and at least a second protocol converter connected to the second device. A data transmission network for transmission of data packets is provided between the protocol converters, wherein the data transmission network is established by an internet protocol (IP) network. The system comprises a first port redirector associated with the first protocol converter. The system comprises a second port redirector associated with the second protocol converter. The first port redirector is configured to convert a protocol for serial data transfer into the transmission control protocol (TCP), thereby generating the data packets. The second port redirector is configured to convert the transmission control protocol (TCP) associated with the data packets into the protocol for serial data transfer. Furthermore, the system is configured to process asynchronous data and synchronous data. The first port redirector is configured to also act as a transmission control protocol port server that waits for transmission control protocol connection requests to transmission control protocol ports to establish a respective connection and then communicates via the data transmission network.

Further, the invention provides a method of transmitting time-critical analog signals and/or digital signals between a first device and a second device. The method comprises the steps of:
- Receiving a time-critical analog signal and/or digital signal by means of the first protocol converter assigned to the first device,
- Converting a protocol for serial data transfer associated with a time-critical analog signal and/or digital signal into the transmission control protocol (TCP) by means of a port redirector associated with a first protocol converter, thereby generating data packets, wherein the port redirector also acts as a transmission control protocol port server that waits for transmission control protocol connection requests to transmission control protocol ports to establish a respective connection,
- Transmitting the data packets to a second protocol converter assigned to the second device via a data transmission network established by an internet protocol (IP) network,
- Converting the transmission control protocol (TCP) associated with the data packets into the protocol for serial data transfer associated with the time critical analog signal and/or digital signal, and
- Forwarding the time-critical analog signal and/or digital signal to the second device.

Accordingly, the data transmission network provides a flexible connection between the respective devices used for exchanging time-critical analog signals and/or digital signals such that a rewiring is not necessary between the respective devices in case of using different devices for transmission and/or reception of the respective signals. Put differently, a direct cable link between the respective devices can be avoided due to the data transmission network interconnected between the respective devices.

For instance, the first device corresponds to a transmission device, whereas the second device corresponds to a reception device. Thus, the first device transmits respective signals to the second device, namely the reception device, via the data transmission network that is established by the internet protocol network. However, the first device may also relate to a reception device, whereas the second device corresponds to the transmission device. Hence, the communication link established between the devices by means of the IP network is a bidirectional one.

Accordingly, the respective devices may be established by transceivers that are generally configured to transmit and receive the signals.

Generally, the system may comprise at least two first devices and/or at least two second devices, particularly at least two transmission devices and/or at least two reception devices.

Put differently, the system comprises several first devices as well as several second devices.

The flexible connection provided by the IP network interconnected ensures that each of the first devices may be connected with each of the second devices randomly without the need of any rewiring between the respective devices. Put differently, one of the first devices may be (solely) connected with a certain second device in a first operation mode, wherein the second of the first devices may be (solely) connected with the certain second device in a second operation mode. No rewiring is necessary between the respective operation modes due to the IP network interconnected.

For instance, the first and/or second devices may be of the same type such that an available device is selected for connecting purposes provided that a respective devices is occupied by a certain service or defect.

Since the respective protocol converters are connected with each other via the data transmission network, a flexible interconnection of the respective devices connected to the protocol converters, namely the transmission device(s) as well as the reception device(s), is possible.

The protocol converters are able to communicate with each other by means of data packets, particularly data packets associated with the internet protocol (IP), via the data transmission network that is established by the internet protocol (IP) network. Accordingly, this eliminates the need for direct cable connections between the devices as mentioned above while enabling the flexible interconnection of the devices simultaneously.

Moreover, the port redirector converts a protocol for serial data transfer into a transmission control protocol (TCP) or vice versa. Accordingly, the bidirectional communication link is established appropriately between the respective protocol converters via the IP network.

The protocol for serial data transfer relates to a process of sending data one bit at a time sequentially. For instance, serial buses are used.

The transmission control protocol (TCP) generally provides a reliable, ordered and error-checked delivery of data between applications running on hosts, namely the respective protocol converters or rather devices, that communicate with each other via the internet protocol (IP) network. The transmission control protocol (TCP) originated in the initial network implementation in which it complimented the internet protocol (IP). Therefore, the entire suite is also often called TCP/IP.

The internet protocol is assigned to the network layer in the Open Systems Interconnection model (OSI model) or rather the internet layer in the Internet protocol suite, whereas TCP corresponds to the transport layer the protocols of which provide host-to-host communication services for applications. However, the transmission control protocol (TCP) differs from a user datagram protocol (UDP) also used as transport layer in IP networks.

In fact, UDP uses a simple connectionless communication model with a minimum of protocol mechanisms. In contrast to UDP, TCP uses a connectionoriented communication model wherein a connection is established (passive open) before data can be send. Accordingly, a TCP connection is established with the help of three-way handshake. The handshake relates to a process of initiating and acknowledging a connection. Once the TCP connection is established, data transfer begins. When the transmission is finished, the connection is terminated by closing of an established virtual circuit.

In general, the internet protocol (IP) is a communication protocol that can be used by different transport protocols. The internet protocol is responsible for addressing host interfaces, encapsulating data into datagrams and routing the datagrams from a source host interface, namely one associated with the first device, to a destination host interface, namely the one associated with a second device, across at least one internet protocol (IP) network. Each datagram has two components, namely a header and a payload. The internet protocol header ("IP header") includes the source IP address, the destination IP address as well as metadata needed to route and deliver the datagram. Further, the payload corresponds to the content of the signal to be transmitted. Generally, the method of nesting the data associated with the payload in a packet with a header is called encapsulation.

The port redirector is a module that transfers data between a serial port, also called communication port (COM port), and a respective network, for instance the IP network associated with a TCP port.

Therefore, the port redirector ensures that multiple serial devices can be connected to a respective port. Moreover, the port redirector makes it possible to access distant serial devices via the data transmission network, namely the IP network. In other words, the port redirector provides access to remote serial devices over the TCP/IP network, namely the IP network while using the transmission control protocol (TCP) as transportation layer.

The port redirector may act as a TCP port client. Accordingly, the port redirector initiates and establishes a connection (by sending connection requests), and then communicates via the IP network. The port redirector acting as the TCP port client allows to establish a connection to a TCP (port) server for each serial port.

However, the port redirector may also act as a TCP port server that waits for TCP connection requests to TCP ports to establish a respective connection, and then communicates via the IP network. The port redirector acting as the TCP port server allows to accept a connection to a respective TCP port.

In fact, the system may comprise two port redirectors acting as TCP port client and TCP port server respectively.

Accordingly, a first port redirector is assigned to the first device(s) and a second port redirector is assigned to the second device(s).

Furthermore, virtual serial ports may also be created by means of the port redirector. Put differently, the port redirector is configured to create virtual serial ports. All data and/or signals written to a respective virtual serial port are redirected to the device connected via the IP network with specified IP-address and TCP port. Thus, the port redirector may get access to remote serial devices associated with the virtual serial ports created.

In fact, the port redirector may create the virtual ports on a first side, wherein each virtual serial port is configured for a connection to a specified IP-address and TCP-port at a second side. As soon as the local virtual ports are opened at the first side, a connection with the second side is established.

Accordingly, the port redirector may be configured to map TCP ports onto virtual serial ports and/or physical serial ports.

Generally, a port relates to a communication endpoint wherein the transmission control protocol used for data transmission uses respective port numbers. In fact, the port is a logical construct that identifies a specific process or a type of network service. Thus, a port number is always associated with an internet protocol (IP) address of a device and the protocol type of communication, namely the transportation protocol. The port completes the destination or origination network address of a respective message to be transmitted.

The system is configured to process asynchronous data.

The asynchronous data relate to an asynchronous data transmission. Hence, an external clock signal is not used since the respective data is transmitted intermittently rather than in a steady stream. Any timing required to recover data from the communication symbols is encoded within the symbols. The asynchronous data transmission provides that data is not transmitted at regular intervals, thus making possible variable bit rate, and that the clock generators assigned to the transmitter and the receiver do not have to be exactly synchronized all the time. In asynchronous data transmission, data is sent one byte at a time and each byte is preceded by start bit and stop bit.

In addition, the system is also configured to process synchronous data.

The synchronous data relate to a synchronous data transmission according to which a transmission of symbols between the transmission device and the reception device is done based on a clock signal. The clock signal can be transmitted or rather derived from the signal received by means of the reception device. This process is called clock recovery. The synchronous data transmission is provided when a fixed phase relationship between signals is provided for several symbols. Therefore, the same clock frequencies have to be present at the transmitter and receiver, namely the respective devices.

The data provided by or rather forwarded to the first device/second device may relate to synchronous data or rather asynchronous data. In fact, the serial data may relate to asynchronous data.

Generally, the system is established by a participant, for instance a mobile participant, particularly a plane, a ship or a drone, or a stationary participant, particularly a base station.

This means that the first device, the second device, the first protocol converter, the second protocol converter as well as the data transmission network are provided by the respective participant, namely the plane, the ship, the drone or the base station.

Hence, the data transmission network may be established by a local area network (LAN). Particularly, Ethernet is used by the system as link layer.

According to an aspect, the port redirector provides the functionality of the respective protocol converter. The respective protocol converter may be integrated in or rather be part of the port redirector. Hence, the port redirector is part of the payload data transmission as it performs the respective protocol conversion for the payload data transmission.

Another aspect provides that at least one clock generator is provided. The clock generator generates a clock signal that may be used for the TCP/IP communication via the data transmission network. Thus, the clock signal generated by the clock generator may ensure the synchronous data transmission via the IP network.

For instance, the port redirector is connected with a clock generator in a clock-precise manner. Therefore, a clock-precise connection is provided that can be used to provide a synchronous data transmission and/or an asynchronous data transmission.

According to another aspect, the system, particularly at least one of the protocol converters, is configured to convert a protocol for synchronous data transmission into a protocol for asynchronous data transmission or vice versa. Particularly, both protocol converters are configured correspondently. Therefore, a conversion between asynchronous data transmission and synchronous data transmission may take place.

Particularly, the respective conversion takes place in a symmetrical manner which means that the first protocol converter and the second protocol converter are configured correspondently such that the conversion of the respective protocol is performed concurrently.

This means that a protocol for an asynchronous data transmission may be converted by the first protocol converter into a protocol for a synchronous data transmission, wherein the second protocol converter re-converts the protocol for the synchronous data transmission into the protocol for the asynchronous data transmission.

Alternatively, a protocol for a synchronous data transmission may be converted by the first protocol converter into a protocol for an asynchronous data transmission, wherein the second protocol converter re-converts the protocol for the asynchronous data transmission into the protocol for the synchronous data transmission.

In other words, the protocols on the sides of the respective protocol converters that are opposite to the IP network are similar.

The respective protocol conversion with regard to data transmission, namely synchronous/asynchronous data transmission, may take place on both sides, for instance a transmission side and a reception side.

Another aspect provides that a configuration module for configuring an internal routing of the signals via inputs and outputs is provided, wherein the configuration module establishes a flexible connection between the devices. The respective connections provided by the respective protocol converters can be configured by means of the configuration module. For this purpose, the configuration module configures the inputs and/or outputs associated with the protocol converters which ensures the internal routing of the respective signals within the system. By adapting the internal routing, the flexible connection between the devices is ensured.

For example, the configuration module may disable an input of the first protocol converter assigned to a first device and enable another input of the first protocol converter assigned to another first device while maintaining a connection to a certain second device associated with an output of the second protocol converter. Hence, a switching of the communication partner for the second device is performed.

In a similar manner, the configuration module may disable respective output(s) of the second protocol converter appropriately.

For instance, the configuration module is established to configure the inputs and the outputs with regard to transmission and/or reception and/or with regard to the kind of data, particularly data associated with an audio signal and/or data signal. The configuration module configures the respective inputs and/or outputs appropriately while taking the kind of data to be exchanged into account.

Furthermore, the respective devices may relate to transceivers as discussed above. Therefore, the configuration module may configure the inputs and/or outputs appropriately such that they are configured to be operated in a reception mode and/or a transmission mode respectively.

According to another aspect, the configuration module is established electrical properties of the inputs and/or outputs. Particularly, the respective electrical properties are configured during operation of the system. The inputs and/or outputs, particularly respective pins, may be configured appropriately with regard to the kind of signals to be exchanged. For instance, the input(s) and/or output(s) are/is configured to be an open collector, a high active and/or a low active. Further, the input(s) and/or output(s) may be set to relate to V.10, V.11, V.26, V.28, X.26 and/or X.27 according to the International Telecommunication Union (ITU) by means of the configuration module.

Furthermore, the configuration module may be established to configure the systems such that a single transmission device, namely a certain first device or rather a certain second device, is connected with several reception devices, namely several second devices or several first devices respectively. Accordingly, a broadcasting system can be established since the single transmission device transmits the respective data associated with the respective signal to several reception devices for further processing.

The configuration module may be established to configure the system such that several transmission devices, namely several first devices or rather several second devices, are connected with several reception devices, namely several second devices or several first devices respectively. Accordingly, a system for conference communication is established since several transmission devices communicate with several reception devices appropriately.

As mentioned above, the respective inputs and outputs may be configured during operation of the system such that a transmission device may be reconfigured to become a reception device and vice versa, particularly during operation of the system.

Another aspect provides that the configuration module has an interface for external configuration. An external control module such as a computer may be connected in order to access the configuration module for configuration purposes. Furthermore, the interface may relate to a user interface such that an operator of the system may access the configuration module in order to perform a manual configuration.

Furthermore, the system may comprise a converter for converting a digital signal into an optical signal or vice versa. The respective data associated with the optical signal may be transmitted via the internet protocol (IP) network, wherein the respective optical signal is converted by means of the converter. On reception side, the data packets associated with the transmission control protocol (TCP) are re-converted into an optical signal to be forwarded to the respective reception device.

Generally, the respective protocol conversion performed by the port server may be configured by means of the configuration module. Hence, a connection is established between the port server and the configuration module.

Another aspect provides that at least one of the devices is configured for a satellite communication or underwater communication. Hence, a satellite communication may be established by at least one of the devices such that signals are received from a satellite or rather transmitted to a satellite. In addition, at least one of the devices may also be configured for underwater communication. For underwater communication, a specific antenna may be provided.

Furthermore, at least one of the devices may be assigned to a converter that is configured to convert acoustic waves in current and/or voltage or vice versa. The current and/or voltage may relate to an analog signal that may be forwarded to the respective protocol converter in order to be transmitted via the internet protocol (IP) network. Thus, the system is also enabled to transmit data received via acoustic waves. Moreover, another converter may be provided that is configured to convert current and/or voltage into acoustic waves. Thus, acoustic waves may also be outputted.

Furthermore, the system may have at least one discrete input and/or output. Accordingly, a device providing and/or receiving discrete signals can be connected to the respective interface(s).

The respective discrete input and/or output may be used for control, ON/OFF, transmit inhibit, push to transmit (PTT), a ciphertext transmission and/or a plaintext transmission.

The foregoing aspects and many of the attendant advantages of the claimed subject matter will become more readily appreciated as the same become better understood by reference to the following detailed description, when taken in conjunction with the accompanying drawings, wherein:
- Figure 1 shows a schematic overview of a system for transmitting time-critical analog signals and/or digital signals according to the invention,
- Figure 2 shows a detail of the system shown in Figure 1,
- Figure 3 shows a detail of Figure 2, and
- Figure 4 shows a detail of Figure 2.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed. The illustrative examples provided herein are not intended to be exhaustive or to limit the claimed subject matter to the precise forms disclosed. For the purposes of the present disclosure, the phrase "at least one of A, B, and C", for example, means (A), (B), (C), (A and B), (A and C), (B and C), or (A, B, and C), including all further possible permutations when greater than three elements are listed. In other words, the term "at least one of A and B" generally means "A and/or B", namely "A" alone, "B" alone or "A and B".

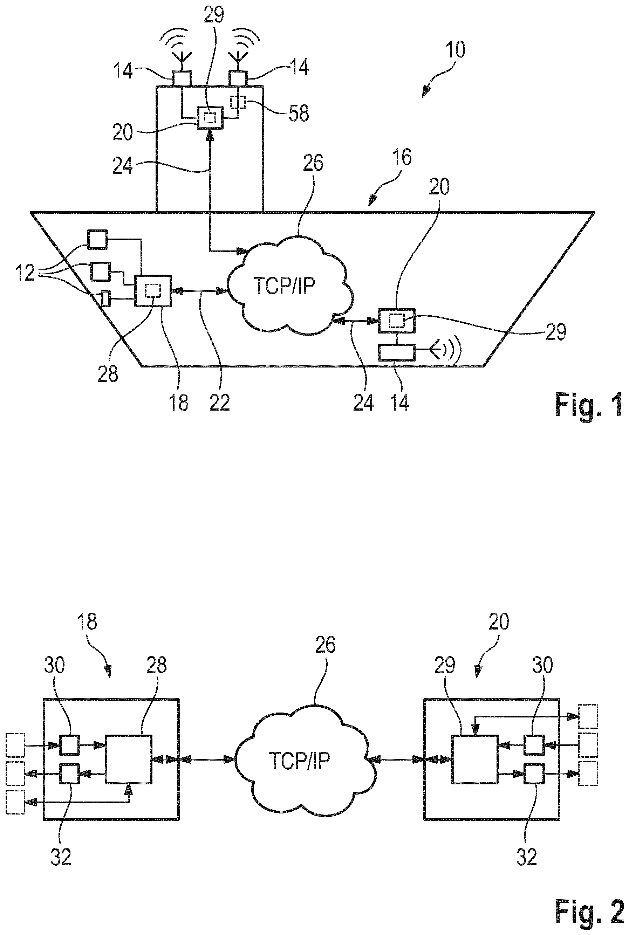

Figure 1 shows a system 10 for transmitting time-critical analog signals and/or digital signals.

The system comprises several first devices 12 as well as several second devices 14. The respective devices 12, 14 may generally be configured by transceivers that are configured to transmit/receive respective signals depending on the operation mode of the system 10.

In the shown embodiment, the first devices 12 may act as transmission devices, whereas the second devices 14 may act as reception devices. In an alternative operation mode, the first devices 12 may act as reception devices, whereas the second devices 14 may act as transmission devices.

As shown in Figure 1, the respective devices 12, 14 are located within a participant 16 that may be established by a mobile participant or a stationary participant.

In the shown embodiment, the mobile participant 16 is a ship that communicates with another participant, for instance a stationary participant, particularly a base station, or a mobile participant such as a satellite, another ship or a submarine.

The several transmission devices 12 may relate to voice terminals that output analog signals in an encrypted or decrypted manner.

Further, the transmission devices 12 may also relate to data terminals that provide digital signals, for instance serial data. The digital signals, particularly the serial data, may be encrypted or decrypted.

The reception devices 14 may relate to radios that can be connected with different antennas for transmitting analog signals and/or digital signals, for instance serial data via radio transmission.

Furthermore, the system 10 comprises at least one first protocol converter 18 that is assigned to the first devices 12, namely the transmission devices.

In addition, the system 10 comprises at least one second protocol converter 20 that is connected with the second devices 14, namely the reception devices.

The respective protocol converters 18, 20 are connected with the respective devices 12, 14 via connection lines 22, 24 respectively.

For instance, the first devices 12 transmit via the respective connections 22 digital signals and/or analog signals to the first protocol converter 18 that has an appropriate interface in order to receive the respective signals.

The first protocol converter 18 converts the signals received into data packets, also called converted data, which are transmitted to the second protocol converter 20 as will be explained later in more detail.

The data packets are transmitted via a data transmission network 26 that is established by an Internet Protocol (IP) network.

Therefore, the first protocol converter 18 is inter alia configured to convert a protocol associated with the signals received via the connections 22 into a transmission control protocol (TCP) that is used by the data packets to be transmitted via the data transmission network 26.

Further, a first port redirector 28 is provided that is assigned to the first protocol converter 18. The port redirector 28 is used to convert the respective protocol for serial data transfer into the transmission control protocol (TCP).

In general, the system 10 ensures a flexible connection between the respective devices 12, 14 since each of the different transmission devices 12 can be used for transmitting the respective signals, namely the content encompassed in the respective signals, via the data transmission network 26 to the different reception devices 14.

The second protocol converter 20 receives the data packets from the data transmission network 26, wherein the second protocol converter 20 converts the transmission control protocol (TCP) associated with the data packets into the protocol used by the respective reception device 14 intended as destination device. Hence, the data packets are converted into the analog signals or rather digital signals that are forwarded to the respective reception device(s) 14 via the connections 24.

Further, a second port redirector 29 is provided that is assigned to the second protocol converter 20. The second port redirector 29 is used to convert the transmission control protocol (TCP) associated with the data packets into the respective protocol for serial data transfer.

In Figure 2, the system 10 is shown in more detail since internal components of the respective protocol converters 18, 20 are shown.

Figure 2 reveals that the first protocol converter 18 as well as the second protocol converter 20 each comprise an analog to digital converter 30 as well as digital to analog converter 32.

Thus, analog signals can be converted into digital data, namely digital signals, to be transmitted via the data transmission network 26 by means of the analog to digital converter(s) 30.

Furthermore, the digital data, namely the digital signals, may be re-converted into analog signals on reception side by means of the digital to analog converter(s) 32.

In addition, digital signals may be received/outputted directly by the respective protocol converter 18, 20 as shown in Figure 2.

As also shown in Figure 1, the data transmission network 26 generally ensures a bidirectional communication between the respective protocol converters 18, 20.

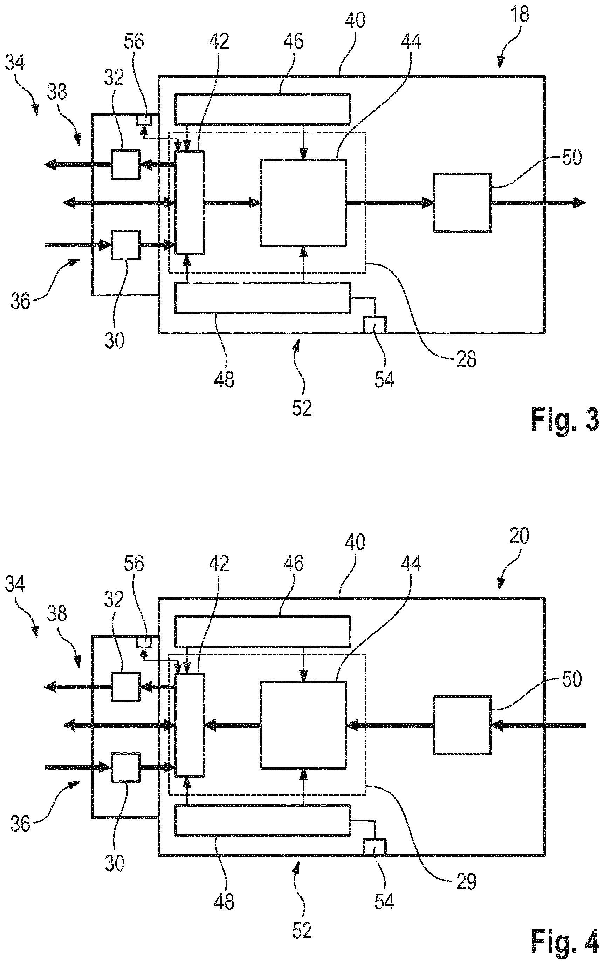

In Figure 3, the first protocol converter 18 is shown in more detail.

The first protocol converter 18 comprises an interface 34 that provides an analog sub-interface 36 as well as a digital sub-interface 38. Therefore, analog as well as digital data may be received by the first protocol converter 18 for transmission purposes.

In addition, the first protocol converter 18 comprises a first processing module 40 that may be established by a field programmable gate array (FPGA).

As shown in Figure 3, the analog-to-digital converter 30 is located upstream of the processing module 40 such that the processing module 40 receives only digital data that might be associated with the originally inputted digital signal or rather the originally inputted analog signal.

The processing module 40 comprises a control unit 42 that receives the respective digital data, wherein the control unit 42 forwards the respective digital data to a TCP unit 44 that encapsulates the data packets according to the transmission control protocol (TCP).

In general, the control unit 42 and the TCP unit 44 are assigned to the port redirector 28.

As shown in Figure 3, the first processing module 14 also comprises a first clock generator 46 that generates a clock signal which is forwarded to the port redirector 28, particularly the TCP unit 44 as well as a control unit 42. Particularly, the clock generator 46 is connected with the port redirector 28 in a clock-precise manner.

Furthermore, the first protocol converter 18 comprises a configuration module 48 that is connected with the port redirector 28, particularly the control unit 42 as well as the TCP unit 44, in a signal transmitting manner.

In general, the configuration module 48 is used to configure the internal routing of inputs and/or outputs of the internal components of the protocol converter 18.

Hence, the flexible connection can be established on transmission side appropriately by means of the configuration module 48.

Moreover, the port redirector 28 is connected with an Ethernet Media Access Controller 50, for instance a Tri-Mode Ethernet Media Access Controller (TEMAC).

The first protocol converter 18 is connected with the data transmission network 26 via the Ethernet Media Access Controller 50.

Hence, the data packets associated with the transmission control protocol (TCP) provided by the port redirector 28 are forwarded to the data transmission network 26 via the Ethernet Media Access Controller 50.

In Figure 4, the second protocol converter 20 is shown in more detail.

As shown in Figure 4, the second protocol converter 20 is established in a substantially similar manner with respect to the first protocol converter 18.

Accordingly, both protocol converters 18, 20 each comprise a configuration module 46 that together form a common configuration module 52.

In fact, the respective configuration module 48 that is associated with the first protocol converter 18 and/or the second protocol converter 20 is generally established to configure the inputs and the outputs with regard to transmission and/or reception or rather with regard to the kind of data to be exchanged, particularly data associated with an audio signal and/or a data signal.

Hence, the respective configuration module 48 configures the port redirector 28, particularly the control unit 42 as well as the TCP unit 44, in an appropriate manner such that data packets according to the transmission control protocol (TCP) are provided accordingly.

For instance, the respective configuration module 48 configures electrical properties of respective pins of inputs and/or outputs assigned to the respective protocol converters 18, 20, particularly the respective control units 42.

The respective configuration of the electrical properties can be done during operation of the system 10 in order to re-configure the system 10 during operation, namely online or live.

In general, the respective configuration module(s) 48 can configure the entire system 10 such that a single transmission device 12 is connected with several reception devices 14 via the respective protocol converters 18, 20 and the data transmission network 26.

Moreover, the respective configuration module(s) 48 may also configure the entire system 10 such that several transmission devices 12 are connected with several reception devices 14.

As shown in Figures 3 and 4, the respective configuration module 48 has an interface 54 for external configuration such that an operator of the system 10 can manually configure the entire system 10 in an appropriate manner.

Alternatively or additionally, an external computing device may be connected with the respective configuration module 48 via the interface 54.

Generally, the system 10 comprises a converter 56 for converting a digital signal into an optical signal or vice versa. Thus, optical signals may also be processed in an appropriate manner by the system 10, wherein the optical signals are converted into digital data for transmission via the data transmission network 28.

The first and/or second devices 12, 14 may be configured for satellite communication, under water communication and/or assigned to a converter 58 that is configured to convert acoustic waves in current and/or voltage or vice versa as shown in Figure 1.

Thus, the entire system 10 may be used for a satellite communication since the respective signals are transmitted to and/or received from satellites.

Moreover, the respective system 10 may also be configured to be operated under water since the respective antenna may be associated with at least one of the devices 12, 14.

Generally, the system 10, particularly the respective protocol converters 18, 20, is configured to convert a protocol for synchronous data transmission into a protocol for asynchronous data transmission or vice versa.

Particularly both protocol converters 18, 20 are configured to convert the respective protocol correspondingly.

In addition, the system 10 has at least one discrete input and/or output. Particularly, the respective discrete input and/or output is assigned to at least one of the respective device(s) 12, 14, such that discrete signals may be used for transmission purposes.

Generally, the system 10 ensures a flexible connection between the transmission side and the reception side within a single participant 16 like a ship as shown in Figure 1.

The system 10 does not require a rewiring in order to transmit different data since all transmission devices 12, namely the first devices, are connected with the first protocol converter 18 that converts the respective input signals into data associated with the transmission control protocol (TCP), thereby generating data packets, in order to transmit the respective payload associated with the input signals via the Internet Protocol network, namely the data transmission network 26.

The second protocol converter 18 re-converts the data packets received that are associated with the transmission control protocol (TCP) into the respective protocol(s) used by the reception devices 14 for further processing, namely the second devices.

Therefore, a simple and cost-efficient way is provided to use several different devices 12, 14 for data transmission in a flexible manner.

## Claims

1. A system for transmitting time-critical analog signals and/or digital signals between a first device (12) and a second device (14), wherein the system (10) comprises at least a first protocol converter (18) connected to the first device (12) and at least a second protocol converter (20) connected to the second device (14), wherein a data transmission network (26) for transmission of data packets is provided between the protocol converters (18, 20), wherein the data transmission network (26) is established by an internet protocol network, wherein the system (10) comprises a first port redirector (28) associated with the first protocol converter (18), and wherein the system (10) comprises a second port redirector (29) associated with the second protocol converter (20), **characterized in that** the first port redirector (28) is configured to convert a protocol for serial data transfer into the transmission control protocol, thereby generating the data packets, wherein the second port redirector (29) is configured to convert the transmission control protocol associated with the data packets into the protocol for serial data transfer, wherein the system (10) is configured to process asynchronous data and synchronous data, and wherein the first port redirector (28) is configured to also act as a transmission control protocol port server that waits for transmission control protocol connection requests to transmission control protocol ports to establish a respective connection and then communicates via the data transmission network (26).

2. The system according to claim 1, **characterized in that** the respective port redirector (28, 29) provides the functionality of the respective protocol converter (18, 20).

3. The system according to any of the preceding claims, **characterized in that** at least one clock generator (46) is provided.

4. The system according to claim 3, **characterized in that** the respective port redirector (28, 29) is connected with the clock generator (46) in a clock-precise manner.

5. The system according to any of the preceding claims, **characterized in that** the system (10), particularly at least one of the protocol converters (18, 20), is configured to convert a protocol for synchronous data transmission into a protocol for asynchronous data transmission or vice versa, in particular wherein both protocol converters (18, 20) are configured correspondently.

6. The system according to any of the preceding claims, **characterized in that** a configuration module (48) is provided for configuring an internal routing of the signals via inputs and outputs, establishing a flexible connection between the devices (12, 14).

7. The system according to claim 6, **characterized in that** the configuration module (48) is established to configure the inputs and the outputs with regard to transmission and/or reception and/or with regard to the kind of data, particularly data associated with an audio signal and/or a data signal.

8. The system according to claim 6 or 7, **characterized in that** the configuration module (48) is established to configure electrical properties of the inputs and/or the outputs, particularly during operation.

9. The system according to any of claims 6 to 8, **characterized in that** the configuration module (48) is established to configure the system (10) such that a single transmission device (12, 14) is connected with several reception devices (14, 12).

10. The system according to any of claims 6 to 9, **characterized in that** the configuration module (48) is established to configure the system (10) such that several transmission devices (12, 14) are connected with several reception devices (14, 12).

11. The system according to any of claims 6 to 10, **characterized in that** the configuration module (48) has an interface (54) for external configuration.

12. The system according to any of the preceding claims, **characterized in that** the system (10) comprises a converter (56) for converting a digital signal into an optical signal or vice versa.

13. The system according to any of the preceding claims, **characterized in that** at least one of the devices (12, 14) is configured for satellite communication or underwater communication and/or **in that** at least one of the devices (12, 14) is assigned to a converter (58) that is configured to convert acoustic waves in current and/or voltage.

14. The system according to any of the preceding claims, **characterized in that** the system (10) has at least one discrete input and/or output, in particular wherein the at least one discrete input and/or output is assigned to at least one of the devices (12, 14).

15. A method of transmitting time-critical analog signals and/or digital signals between a first device (12) and a second device (14), with the steps of:
- Receiving a time-critical analog signal and/or digital signal by means of a first protocol converter (18) assigned to the first device (12),
- Converting a protocol for serial data transfer associated with the time-critical analog signal and/or digital signal into the transmission control protocol by means of a port redirector (28) associated with the first protocol converter (18), thereby generating data packets, wherein the port redirector (28) also acts as a transmission control protocol port server that waits for transmission control protocol connection requests to transmission control protocol ports to establish a respective connection,
- Transmitting the data packets to a second protocol converter (20) assigned to the second device (14) via a data transmission network (26) established by an internet protocol (IP) network,
- Converting the transmission control protocol associated with the data packets into the protocol for serial data transfer associated with the time-critical analog signal and/or digital signal, and
- Forwarding the time-critical analog signal and/or digital signal to the second device (14).

## Patentansprüche

1. System zum Übertragen von zeitkritischen analogen Signalen und/oder digitalen Signalen zwischen einer ersten Vorrichtung (12) und einer zweiten Vorrichtung (14), wobei das System (10) mindestens einen ersten Protokollwandler (18), der mit der ersten Vorrichtung (12) verbunden ist, und mindestens einen zweiten Protokollwandler (20), der mit der zweiten Vorrichtung (14) verbunden ist, umfasst, wobei ein Datenübertragungsnetzwerk (26) für eine Übertragung von Datenpaketen zwischen den Protokollwandlern (18, 20) bereitgestellt ist, wobei das Datenübertragungsnetzwerk (26) durch ein Internetprotokollnetzwerk eingerichtet wird, wobei das System (10) einen ersten Port-Umleiter (28), der dem ersten Protokollwandler (18) zugeordnet ist, umfasst, und wobei das System (10) einen zweiten Port-Umleiter (29), der dem zweiten Protokollwandler (20) zugeordnet ist, umfasst, **dadurch gekennzeichnet, dass** der erste Port-Umleiter (28) konfiguriert ist, um ein Protokoll für serielle Datenübertragung in das Transmission Control Protocol umzuwandeln, wobei dadurch die Datenpakete erzeugt werden, wobei der zweite Port-Umleiter (29) konfiguriert ist, um das Transmission Control Protocol, das den Datenpaketen zugeordnet ist, in das Protokoll für serielle Datenübertragung umzuwandeln, wobei das System (10) konfiguriert ist, um asynchrone Daten und synchrone Daten zu verarbeiten, und wobei der erste Port-Umleiter (28) konfiguriert ist, um ebenso als ein Port-Server für das Transmission Control Protocol zu fungieren, der auf Transmission Control Protocol-Verbindungsaufbauanforderungen an Transmission Control Protocol Ports wartet, um eine jeweilige Verbindung aufzubauen, und dann über das Datenübertragungsnetzwerk (26) kommuniziert.

2. System nach Anspruch 1, **dadurch gekennzeichnet, dass** der jeweilige Port-Umleiter (28, 29) die Funktionalität des jeweiligen Protokollwandlers (18, 20) bereitstellt.

3. System nach einem der vorstehenden Ansprüche,
**dadurch gekennzeichnet, dass** mindestens ein Taktgenerator (46) bereitgestellt ist.

4. System nach Anspruch 3, **dadurch gekennzeichnet, dass** der jeweilige Port-Umleiter (28, 29) mit dem Taktgenerator (46) taktgenau verbunden ist.

5. System nach einem der vorstehenden Ansprüche,
**dadurch gekennzeichnet, dass** das System (10), besonders mindestens einer von den Protokollwandlern (18, 20), konfiguriert ist, um ein Protokoll für synchrone Datenübertragung in ein Protokoll für asynchrone Datenübertragung oder umgekehrt umzuwandeln, insbesondere wobei beide Protokollwandler (18, 20) entsprechend konfiguriert sind.

6. System nach einem der vorstehenden Ansprüche,
**dadurch gekennzeichnet, dass** ein Konfigurationsmodul (48) zum Konfigurieren eines internen Routings der Signale über Eingänge und Ausgänge bereitgestellt ist, wobei eine flexible Verbindung zwischen den Vorrichtungen (12, 14) aufgebaut wird.

7. System nach Anspruch 6, **dadurch gekennzeichnet, dass** das Konfigurationsmodul (48) eingerichtet ist, um die Eingänge und die Ausgänge hinsichtlich Übertragung und/oder Empfang und/oder hinsichtlich der Art von Daten, besonders von Daten, die einem Audiosignal und/oder einem Datensignal zugeordnet sind, zu konfigurieren.

8. System nach Anspruch 6 oder 7, **dadurch gekennzeichnet, dass** das Konfigurationsmodul (48) eingerichtet ist, um elektrische Eigenschaften der Eingänge und/oder der Ausgänge, besonders während eines Betriebs, zu konfigurieren.

9. System nach einem der Ansprüche 6 bis 8, **dadurch gekennzeichnet, dass** das Konfigurationsmodul (48) eingerichtet ist, um das System (10) derart zu konfigurieren, dass eine einzelne Übertragungsvorrichtung (12, 14) mit mehreren Empfangsvorrichtungen (14, 12) verbunden ist.

10. System nach einem der Ansprüche 6 bis 9,
**dadurch gekennzeichnet, dass** das Konfigurationsmodul (48) eingerichtet ist, um das System (10) derart zu konfigurieren, dass mehrere Übertragungsvorrichtungen (12, 14) mit mehreren Empfangsvorrichtungen (14, 12) verbunden sind.

11. System nach einem der Ansprüche 6 bis 10,
**dadurch gekennzeichnet, dass** das Konfigurationsmodul (48) eine Schnittstelle (54) für externe Konfiguration aufweist.

12. System nach einem der vorstehenden Ansprüche,
**dadurch gekennzeichnet, dass** das System (10) einen Wandler (56) zum Umwandeln eines digitalen Signals in ein optisches Signal oder umgekehrt umfasst.

13. System nach einem der vorstehenden Ansprüche,
**dadurch gekennzeichnet, dass** mindestens eine von den Vorrichtungen (12, 14) für Satellitenkommunikation oder Unterwasserkommunikation konfiguriert ist und/oder dass mindestens eine von den Vorrichtungen (12, 14) einem Wandler (58) zugewiesen ist, der konfiguriert ist, um Schallwellen in Strom und/oder Spannung umzuwandeln.

14. System nach einem der vorstehenden Ansprüche,
**dadurch gekennzeichnet, dass** das System (10) mindestens einen diskreten Eingang und/oder Ausgang aufweist, insbesondere wobei der mindestens eine diskrete Eingang und/oder Ausgang mindestens einer von den Vorrichtungen (12, 14) zugewiesen ist.

15. Verfahren zum Übertragen von zeitkritischen analogen Signalen und/oder digitalen Signalen zwischen einer ersten Vorrichtung (12) und einer zweiten Vorrichtung (14), mit den Schritten:
- Empfangen eines zeitkritischen analogen Signals und/oder digitalen Signals mittels eines ersten Protokollwandlers (18), der der ersten Vorrichtung (12) zugewiesen ist,
- Umwandeln eines Protokolls für serielle Datenübertragung, das dem zeitkritischen analogen Signal und/oder digitalen Signal zugeordnet ist, in das Transmission Control Protocol mittels eines Port-Umleiters (28), der dem ersten Protokollwandler (18) zugeordnet ist, wobei dadurch Datenpakete erzeugt werden, wobei der Port-Umleiter (28) ebenso als ein Port-Server für das Transmission Control Protocol fungiert, der auf Transmission Control Protocol-Verbindungsaufbauanforderungen an Transmission Control Protocol Ports wartet, um eine jeweilige Verbindung aufzubauen,
- Übertragen der Datenpakete an einen zweiten Protokollwandler (20), der der zweiten Vorrichtung (14) zugewiesen ist, über ein Datenübertragungsnetzwerk (26), das durch ein Internetprotokollnetzwerk (IP-Netzwerk) eingerichtet wird,
- Umwandeln des Transmission Control Protocols, das den Datenpaketen zugeordnet ist, in das Protokoll für serielle Datenübertragung, das dem zeitkritischen analogen Signal und/oder digitalen Signal zugeordnet ist, und
- Weiterleiten des zeitkritischen analogen Signals und/oder digitalen Signals an die zweite Vorrichtung (14).

## Revendications

1. Système permettant de transmettre des signaux analogiques et/ou des signaux numériques urgents entre un premier dispositif (12) et un second dispositif (14), dans lequel le système (10) comprend au moins un premier convertisseur de protocole (18) connecté au premier dispositif (12) et au moins un second convertisseur de protocole (20) connecté au second dispositif (14), dans lequel un réseau de transmission de données (26) pour transmission de paquets de données est prévu entre les convertisseurs de protocole (18, 20), dans lequel le réseau de transmission de données (26) est établi par un réseau de protocole Internet, dans lequel le système (10) comprend un premier redirecteur de port (28) associé au premier convertisseur de protocole (18), et dans lequel le système (10) comprend un second redirecteur de port (29) associé au second convertisseur de protocole (20), **caractérisé en ce que** le premier redirecteur de port (28) est configuré pour convertir un protocole pour un transfert de données en série en protocole de commande de transmission, générant ainsi les paquets de données, dans lequel le second redirecteur de port (29) est configuré pour convertir le protocole de commande de transmission associé aux paquets de données en protocole pour un transfert de données en série, dans lequel le système (10) est configuré pour traiter des données asynchrones et des données synchrones, et dans lequel le premier redirecteur de port (28) est configuré pour agir également en tant que serveur de port de protocole de commande de transmission qui attend des demandes de connexion de protocole de commande de transmission au niveau de ports de protocole de commande de transmission pour établir une connexion respective et communique ensuite par l'intermédiaire du réseau de transmission de données (26).

2. Système selon la revendication 1, **caractérisé en ce que** le redirecteur de port respectif (28, 29) fournit la fonctionnalité du convertisseur de protocole respectif (18, 20).

3. Système selon l'une quelconque des revendications précédentes,
**caractérisé en ce qu'**au moins un générateur d'horloge (46) est prévu.

4. Système selon la revendication 3, **caractérisé en ce que** le redirecteur de port respectif (28, 29) est connecté au générateur d'horloge (46) avec une précision d'horloge.

5. Système selon l'une quelconque des revendications précédentes,
**caractérisé en ce que** le système (10), en particulier au moins un des convertisseurs de protocole (18, 20), est configuré pour convertir un protocole pour une transmission synchrone de données en un protocole pour une transmission asynchrone de données ou inversement, en particulier, dans lequel les deux convertisseurs de protocole (18, 20) sont configurés de manière correspondante.

6. Système selon l'une quelconque des revendications précédentes,
**caractérisé en ce qu'**un module de configuration (48) est prévu pour configurer un routage interne des signaux par l'intermédiaire d'entrées et de sorties, établissant une connexion flexible entre les dispositifs (12, 14).

7. Système selon la revendication 6, **caractérisé en ce que** le module de configuration (48) est établi pour configurer les entrées et les sorties en ce qui concerne la transmission et/ou la réception et/ou en ce qui concerne le type de données, en particulier, des données associées à un signal audio et/ou un signal de données.

8. Système selon la revendication 6 ou 7, **caractérisé en ce que** le module de configuration (48) est établi pour configurer des propriétés électriques des entrées et/ou des sorties, en particulier pendant le fonctionnement.

9. Système selon l'une quelconque des revendications 6 à 8,
**caractérisé en ce que** le module de configuration (48) est établi pour configurer le système (10) de telle sorte qu'un seul dispositif de transmission (12, 14) est connecté à plusieurs dispositifs de réception (14, 12).

10. Système selon l'une quelconque des revendications 6 à 9,
**caractérisé en ce que** le module de configuration (48) est établi pour configurer le système (10) de telle sorte que plusieurs dispositifs de transmission (12, 14) sont connectés à plusieurs dispositifs de réception (14, 12).

11. Système selon l'une quelconque des revendications 6 à 10,
**caractérisé en ce que** le module de configuration (48) a une interface (54) pour une configuration externe.

12. Système selon l'une quelconque des revendications précédentes,
**caractérisé en ce que** le système (10) comprend un convertisseur (56) pour convertir un signal numérique en un signal optique ou inversement.

13. Système selon l'une quelconque des revendications précédentes,
**caractérisé en ce qu'**au moins l'un parmi les dispositifs (12, 14) est configuré pour une communication par satellite ou une communication sous-marine et/ou **en ce qu'**au moins l'un parmi les dispositifs (12, 14) est attribué à un convertisseur (58) qui est configuré pour convertir des ondes acoustiques en courant et/ou en tension.

14. Système selon l'une quelconque des revendications précédentes,
**caractérisé en ce que** le système (10) a au moins une entrée et/ou une sortie discrète, en particulier, dans lequel l'au moins une parmi une entrée et/ou une sortie distinctes sont attribuées à au moins l'un parmi les dispositifs (12, 14).

15. Procédé de transmission de signaux analogiques et/ou de signaux numériques urgents entre un premier dispositif (12) et un second dispositif (14), avec les étapes consistant à :
- Recevoir un signal analogique et/ou un signal numérique urgent au moyen d'un premier convertisseur de protocole (18) attribué au premier dispositif (12),
- Convertir un protocole pour un transfert de données en série associé au signal analogique et/ou au signal numérique urgent en protocole de commande de transmission au moyen d'un redirecteur de port (28) associé au premier convertisseur de protocole (18), générant ainsi des paquets de données, dans lequel le redirecteur de port (28) agit également en tant que serveur de port de protocole de commande de transmission qui attend des demandes de connexion de protocole de commande de transmission au niveau de ports de protocole de commande de transmission pour établir une connexion respective,
- Transmettre des paquets de données à un second convertisseur de protocole (20) attribué au second dispositif (14) par l'intermédiaire d'un réseau de transmission de données (26) établi par un réseau de protocole Internet (IP),
- Convertir le protocole de commande de transmission associé aux paquets de données en protocole pour le transfert de données en série associé au signal analogique et/ou au signal numérique urgent, et
- Transférer le signal analogique et/ou le signal numérique urgent au second dispositif (14).
